# EUROPÄISCHE PATENTSCHRIFT

(11) **EP 1 758 755 B1**
(45) Veröffentlichungstag und Bekanntmachung des Hinweises auf die Patenterteilung: **26.08.2009**
(21) Anmeldenummer: 05749944.4
(22) Anmeldetag: 10.05.2005
(51) Int. Cl.: B60K 31/00

(54) **VERFAHREN UND VORRICHTUNG ZUR FAHRERUNTERSTÜTZUNG**
DRIVER ASSISTANCE METHOD AND DEVICE
PROCEDE ET DISPOSITIF D'AIDE A LA CONDUITE

(30) Priorität: 17.06.2004 DE 102004029369
(43) Veröffentlichungstag der Anmeldung: 07.03.2007
(73) Patentinhaber: ROBERT BOSCH GMBH, 70442 Stuttgart (DE)
(72) Erfinder: KOENIG, Winfried, 76327 Pfinztal (DE); KORTHAUER, Andreas, 70499 Stuttgart (DE); EGELAAF, Jan, 71229 Leonberg (DE); PLACKE, Lars, 30163 Hannover (DE)
(86) Internationale Anmeldenummer: PCT/EP2005/052104
(87) Internationale Veröffentlichungsnummer: WO 2005/123439

(56) Entgegenhaltungen:
- DE-A1- 10 109 046
- DE-A1- 10 118 265
- DE-A1- 10 212 756
- DE-A1- 19 821 122

## Beschreibung

### Stand der Technik

Die Erfindung betrifft ein Verfahren und einer Vorrichtung zur Fahrerunterstützung.

Situationen, in denen der Fahrzeugführer Aspekte der Längs- sowie Querführung in geeigneter Weise aufeinander abstimmen und koordinieren muss, stellen besondere Anforderungen und weisen ein hohes Gefahrenpotential auf. Dies gilt insbesondere für Situationen, in denen ein Spurwechsel mit einer gleichzeitigen angepassten Geschwindigkeitsveränderung einhergeht. Die klassischen Beispiele hierfür sind das Auffahren auf eine Autobahn oder das Einleiten eines Überholvorgangs, nachdem zunächst mit gleicher Geschwindigkeit hinter dem zu überholenden Fahrzeug gefahren wurde.

Die vorliegende Erfindung betrifft ein Verfahren und einer Vorrichtung zur Fahrerunterstützung mit einer Umfeldsensorik zur Erfassung des Verkehrsumfelds einschließlich des Verkehrs auf einer Nebenspur gemäß dem Gegenstand der Ansprüche 1 und 5. Ferner erfolgt eine Information des Fahrers bezüglich eines geeigneten Zeitpunkts für einen Spurwechsel und/oder der für einen Spurwechsel geeigneten Geschwindigkeit und/oder Beschleunigung des Fahrzeugs.

Ein solcher Spurwechselassistent ist z. B. aus DE 101 14 187 A1 bekannt und wird in Verbindung mit einem Geschwindigkeitsregelsystem, beispielsweise einem so genannten ACC-System (Adaptive Cruise Control) eingesetzt, das nicht nur in der Lage ist, die Geschwindigkeit des Fahrzeugs auf eine vom Fahrer gewählte Wunschgeschwindigkeit zu regeln, sondern auch in der Lage ist, die Geschwindigkeit des eigenen Fahrzeugs erforderlichenfalls an die Geschwindigkeit des vorausfahrenden Fahrzeugs anzupassen, so dass dieses in einem geeigneten Sicherheitsabstand verfolgt wird. Zu diesem Zweck ist eine Umfeldsensorik, beispielsweise in der Form eines Radarsensors vorhanden, mit dem die Abstände und auch die Relativgeschwindigkeiten vorausfahrender Fahrzeuge gemessen werden können. Solche ACC-Systeme sind insbesondere für Fahrten auf mehrspurigen Schnellstraßen oder Autobahnen vorgesehen.

Der Spurwechselassistent dient dazu, dem Fahrer den Wechsel auf eine Nebenspur zu erleichtern, beispielsweise, wenn er einen Überholvorgang einleiten will.

Der aus der oben genannten Druckschrift bekannte Spurwechselassistent ist so ausgebildet, dass er, wenn ein Spurwechselwunsch des Fahrers erkannt ist, automatisch einen Beschleunigungsvorgang einleitet, so dass das Einfädeln in den fließenden Verkehr ' auf der Nebenspur erleichtert wird. Die bei diesem Beschleunigungsvorgang zu erreichende Zielgeschwindigkeit oder Überholgeschwindigkeit ist dabei nicht nur von der Geschwindigkeit des auf der eigenen Spur vorausfahrenden, zu überholenden Fahrzeugs abhängig, sondern auch von der Geschwindigkeit eines oder mehrerer weiterer Fahrzeuge, die sich vor dem eigenen Fahrzeug auf der Nebenspur befinden. Auf diese Weise wird ein zu dichtes Auffahren auf das Fahrzeug auf der Nebenspur vermieden.

Ein Überholwunsch des Fahrers wird bei dem bekannten System beispielsweise daran erkannt, dass der Fahrer den entsprechenden Fahrtrichtungsanzeiger (Blinker) betätigt. Bei Erkennung des Überholwunsches wird dann unmittelbar der Beschleunigungsvorgang ausgelöst.

Des weiteren sind auch Spurwechselassistenzsysteme wie z.B. Tote-Winkel-Warnsysteme bekannt, die mit Hilfe der Umfeldsensorik die Nebenspur seitlich des Fahrzeugs und hinter dem Fahrzeug erfassen und den Fahrer bei einem Spurwechsel optisch, akustisch oder haptisch warnen, wenn sich ein Fahrzeug im toten Winkel befindet. Die Ausgabe eines solchen Warnsignals kann für den Fahrer jedoch störend sein, übersehen werden oder vom Fahrer falsch interpretiert werden.

Die DE 102 12 756 A1 zeigt ein Spurwechselassistenzsystem. Dort wird mittels einer Umfeldsensorik eine Lücke im Fahrzeugstrom auf einer benachbarten Fahrspur erfasst, eine Mindestbeschleunigung des eigenen Fahrzeugs zum gefahrlosen Einfahren in diese ermittelte Lücke berechnet und dann dem Fahrer die Möglichkeit des Einfahrens in die Lücke bei gleichzeitiger Beschleunigung optisch und/oder akustisch und/oder haptisch angezeigt. Mit anderen Worten wird der Fahrer von der Möglichkeit des Einscherens unterrichtet, die jedoch unter der Voraussetzung steht, eine bestimmte Beschleunigung des eigenen Fahrzeugs zu erreichen.

Die DE 101 09 046 A1 zeigt den Fahrspurwechsel eines lose gekuppelten Zugverbandes.

Vorteile der Erfindung

Durch die Information des Fahrers über einen geeigneten Zeitpunkt für einen Spurwechsel und/oder die dabei zu erreichende Geschwindigkeit und/oder Beschleunigung bleibt der Fahrer für die Durchführung des Spurwechsels vollständig verantwortlich. Dennoch wird die Sicherheit des Spurwechsels durch die abgegebene Information deutlich verbessert und der Fahrer in dieser oft unübersichtlichen und gefährlichen Situation unterstützt. Ein erheblicher Komfortgewinn kann zusätzlich erreicht werden.

Die Erkennung des Spurwechselwunsches des Fahrers und die tatsächliche Empfehlung an den Fahrer, den Spurwechsel einzuleiten bzw. die Geschwindigkeit anzupassen fallen zeitlich auseinander. Wenn beispielsweise der Fahrer durch Setzen des Blinkers einen Spurwechselwunsch zu erkennen gibt, ein gefahrloser Spurwechsel zu diesem Zeitpunkt aber nicht möglich ist, weil sich auf der Nebenspur noch ein überholendes Fahrzeug befindet, das noch keinen ausreichenden Sicherheitsabstand zu dem eigenen Fahrzeug gewonnen hat, so wird der Spurwechselwunsch des Fahrers registriert und berücksichtigt, doch erfolgt die Information zum Einleiten des Spurwechsels bzw. zur Geschwindigkeitsanpassung erst zu einem späteren Zeitpunkt, nämlich dann, wenn sich das überholende Fahrzeug mit einem ausreichenden Sicherheitsabstand entfernt hat. Falls diesem überholenden Fahrzeug auf der Nebenspur noch ein weiteres Fahrzeug folgt, und die Lücke oder das "Fenster" zwischen diesen Fahrzeugen zu klein ist, wird die Fahrerinformation weiter ausgesetzt, bis auch das zweite Fahrzeug seinen Überholvorgang abgeschlossen hat. Auf diese Weise erhält der Fahrer eine sehr wirksame Unterstützung bei der Entscheidung, ob und wann ein gefahrloser Spurwechsel möglich ist.

Besonders vorteilhaft ist dabei, dass die beispielsweise durch Radarsensoren oder Videosensoren gebildete Umfeldsensorik die relevanten Abstände und Relativgeschwindigkeiten wesentlich genauer messen und bewerten kann als dies einem menschlichen Fahrer, insbesondere einem ungeübten Fahrer möglich ist. So wird durch die Erfindung ein erheblicher Beitrag zur Verkehrssicherheit geleistet.

Wahlweise oder ergänzend können für die Erkennung des Spurwechselwunsches des Fahrers auch andere Kriterien herangezogen werden, beispielsweise Lenkbewegungen und dergleichen.

Für eine zuverlässige Erkennung des Fensters für einen Spurwechsel sollte die Umfeldsensorik in der Lage sein, nicht nur den Verkehr im Rückraum auf der Nebenspur zu überwachen, sondern auch Fahrzeuge zu erkennen, die sich mit dem eigenen Fahrzeug auf annähernd gleicher Höhe befinden. Während für die Überwachung des Rückraums im allgemeinen ein Radar- oder Videosensor zweckmäßig sein wird, der auch die Messung von Relativgeschwindigkeiten gestattet, bietet sich für die Überwachung des Raums neben dem eigenen Fahrzeug ein Nahbereichssensor, z. B. ein Nahbereichsradar, ein kurzreichweitiges Lidar-System, ein Videosystem oder auch der Einsatz von Ultraschallsensoren an. Die mit solchen Sensoren nicht direkt messbare Geschwindigkeit des auf gleicher Höhe fahrenden Fahrzeugs kann bei überholenden Fahrzeugen durch Extrapolation der zuvor mit Hilfe des Rückraumsensors gemessenen Geschwindigkeit abgeschätzt werden.

Die Umfeldsensorik kann je nach dem, ob das Fahrzeug in einem Land mit Rechtsverkehr oder mit Linksverkehr eingesetzt wird, für die Überwachung einer der beiden Fahrzeugseiten oder auch für die Überwachung beider Fahrzeugseiten ausgebildet sein. Im letzteren Fall kann das System den Fahrer auch bei der Rückkehr auf die langsamere Fahrspur unterstützen.

Die Überwachung des Verkehrs auf der Nebenspur kann permanent oder nur bei erkanntem oder anzunehmendem Spurwechselwunsch des Fahrers erfolgen.

Für die Erkennung eines geeigneten Spurwechselfensters sind die folgenden Kriterien maßgebend: die Abstände der Fahrzeuge, die Größen der Lücken, d. h., der räumlichen Fenster zwischen den Fahrzeugen auf der Nebenspur, und die Relativgeschwindigkeiten der Fahrzeuge auf der Nebenspur und damit die Relativgeschwindigkeiten der Lücken. Zu berücksichtigen sind weiterhin die Sicherheitsabstände zwischen den einzelnen Fahrzeugen, das Beschleunigungsvermögen des eigenen Fahrzeugs und gegebenenfalls ein Grenzwert für eine gewisse Verzögerung, die einem nachfolgenden Fahrzeug "zugemutet" werden kann. Bei den Sicherheitsabständen ist zu unterscheiden zwischen den regulären Sicherheitsabständen oder Zeitlücken bei länger dauernder Kolonnenfahrt und kleineren Mindestabständen, die auch kurzfristig nicht unterschritten werden dürfen. Hinsichtlich des Beschleunigungsvermögens des eigenen Fahrzeugs sind gegebenenfalls auch Beschränkungen zu berücksichtigen, die sich aus Komfortgesichtspunkten, der Zuladung und dergleichen ergeben können.

Bei der Erkennung und Auswahl eines Fensters für den Spurwechsel kann man beispielsweise wie folgt vorgehen. Zunächst wird anhand des Nahbereichssensors geprüft, ob sich auf der Nebenspur ein Fahrzeug etwa auf gleicher Höhe befindet. Wenn dies nicht der Fall ist, wird geprüft, ob die Lücke zwischen dem unmittelbar vorausfahrenden Fahrzeug auf der Nebenspur und dem unmittelbar nachfolgenden Fahrzeug auf der Nebenspur groß genug ist, um ein Einscheren unter Berücksichtigung der Sicherheitsabstände (Mindestabstände) zu gestatten. Bei Nutzfahrzeugen oder Gespannen ist hier gegebenenfalls auch die Länge des eigenen Fahrzeugs zu berücksichtigen. Wenn die Lücke groß genug ist, wird anhand der Relativgeschwindigkeiten geprüft, ob es möglich ist, das eigene Fahrzeug so weit zu beschleunigen, dass das nachfolgende Fahrzeug auf der Nebenspur nach dem Spurwechsel einen ausreichenden Sicherheitsabstand zum eigenen Fahrzeug einhalten kann.

Diese Bedingung wird vorzugsweise als nicht erfüllt angesehen, wenn der Abstand des nachfolgenden Fahrzeugs zum aktuellen Zeitpunkt, bereits kleiner ist als der Mindestabstand.

Wenn sich anhand dieser Kriterien ergibt, dass ein sicherer Spurwechsel nicht möglich ist, werden auf analoge Weise nacheinander, nach rückwärts fortschreitend, die Lücken zwischen den nachfolgenden Fahrzeugen auf der Nebenspur untersucht. Wenn eine geeignete Lücke gefunden ist, lässt sich aus der Länge dieser Lücke, den Abständen und Relativgeschwindigkeiten ein Zeitfenster bestimmen, innerhalb dessen der Spurwechsel möglich ist Die Grenzen dieses Zeitfensters bilden dann die Grundlage für die Bestimmung des geeigneten Zeitpunkts, zu dem der Fahrer einen Spurwechsel einleiten kann bzw. das Fahrzeug beschleunigen kann. Der Fahrer wird dabei optisch, akustisch und/oder haptisch für die Dauer des Zeitfensters informiert. Nach Ablauf des Zeitfenster ohne Spurwechsel wird der Fahrer in einer Ausführung durch eine Änderung der Information wie z.B. der Farbe, der Tonhöhe, des Klanges, etc. über den nicht mehr zu empfehlenden Spurwechsel unterrichtet. Falls der Fahrer das Fahrzeug beschleunigen sollte, wird er ebenfalls auf eine geeignete Art über diese Tatsache und/oder über die zu erreichende Geschwindigkeit informiert, z.B. mittels einer vorzugsweise mit der optimalen Beschleunigung sich verändernder Anzeige im Tachometer.

Für die Berechnung einer geeigneten Beschleunigungsstrategie sind dann die folgenden, wechselseitig voneinander abhängigen Parameter zu bestimmen: der Zeitpunkt des Beschleunigungsbeginns, die am Ende des Beschleunigungsvorgangs zu erreichende Zielgeschwindigkeit und die Größe der Beschleunigung des eigenen Fahrzeugs. Diese Größe kann im einfachsten Fall konstant, im Allgemeinen jedoch auch zeitabhängig sein.

Für die Festlegung und Berechnung dieser Parameter sind verschiedene Algorithmen denkbar. Ein Ansatz besteht darin, dass man zunächst unter Berücksichtigung des Beschleunigungsvermögens des eigenen Fahrzeugs und unter Komfortgesichtspunkten einen geeigneten Wert für die Beschleunigung sowie einen geeigneten Wert für die Zielgeschwindigkeit festlegt, die bis zum spätestmöglichen Spurwechselzeitpunkt erreicht werden soll, und dann anhand dieser Größen den Zeitpunkt für den Beginn der Beschleunigung berechnet. Die Zielgeschwindigkeit kann dabei je nach Situation die Geschwindigkeit des vorausfahrenden Fahrzeugs auf der Nebenspur, die Geschwindigkeit des nachfolgenden Fahrzeugs auf der Nebenspur oder ein geeigneter Kompromiss zwischen beiden sein. Um den Überholvorgang abzukürzen, kann dabei auch eine moderate und zeitlich begrenzte Überschreitung der vom Fahrer gewählten Wunschgeschwindigkeit zugelassen werden.

Ein alternativer Ansatz besteht darin, dass für den Abstand des Fahrzeugs, das das vordere Ende der Einscherlücke markiert, und/oder für den Abstand des Fahrzeugs, das das hintere Ende dieser Lücke markiert, eine optimale, durch möglichst geringe Beschleunigungen gekennzeichnete Weg/Zeit-Kurve festgelegt und dann der Beschleunigungsverlauf aus dieser Kurve abgeleitet wird.

Besonders vorteilhaft ist, dass alle Hauptaspekte, die aus Sicht des Fahrers in einer wie oben geschilderten Situationen auftreten, durch die beschriebene Vorgehensweise berücksichtigt werden:
1) Die Verkehrssituation hinter ihm - insbesondere auf der von ihm linken Spur
2) Die Verkehrssituation vor ihm - z.B. das Verhalten sowie die Geschwindigkeiten der vorausfahrenden Fahrzeuge aber auch die Streckenführung z.B. das Ende der Auffahrspur
3) Die Einschätzung der eigenen Geschwindigkeit in Abhängigkeit so der anderer Fahrzeuge im Umfeld
   Dadurch wird eine situationsangepasste Längs- und Querführung erreicht. Zum einen wird dem Fahrer eine situationsangepasste Beschleunigungsempfehlung gegeben, um eine angemessene Geschwindigkeit vor dem Spurwechsel zu erreichen. Dies adressiert insbesondere Situationen in denen Fahrer mit einem grossen Geschwindigkeitsunterschied zum Verkehr auf der anderen Spur einen Spurwechsel durchführen müssen. Zum anderen wird auch die Verkehrs- und Streckensituation vor dem Fahrzeug mit in Betracht gezogen. Auf diese Weise können Zwangshandlungen vermieden werden. Beispielsweise das zwangsläufige Einfädeln am Ende der Beschleunigungsspur ohne entsprechende Geschwindigkeit

Weitere Vorteile ergeben sich aus der nachfolgenden Beschreibung von Ausführungsbeispielen bzw. aus den abhängigen Ansprüchen.

Zeichnung

Die Erfindung wird im Folgenden anhand von nachstehend beschriebenen Ausführungsbeispielen in den Zeichnungen dargestellt und näher erläutert.

Es zeigen:
ein Blockdiagramm eines Fahrerassistenzsystems;
eine Skizze einer Verkehrssituation zur Erläuterung der Funktionsweise des Spurwechselassistenten;
eine Skizze einer anderen Verkehrssituation;
eine Skizze einer weiteren Verkehrssituation;
eine Skizze einer vierten Verkehrsituation;
eine Skizze einer fünften Verkehrssituation.

### Beschreibung des Ausführungsbeispiels

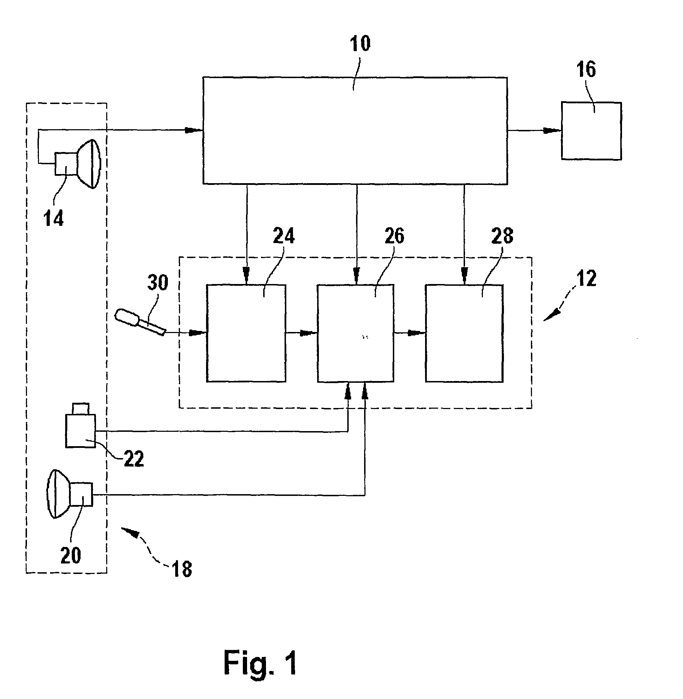

Figur 1 zeigt ein vereinfachtes Blockdiagramm eines Fahrerassistenzsystems 10 für ein Kraftfahrzeug sowie einen zugehörigen Spurwechselassistenten 12, der Teil des Fahrerassistenzsystems 10 sein kann. Das Fahrerassistenzsystem 10 erhält Signale von wenigstens einem Frontradar 14. Es steuert eine Informationseinheit 16 an, über die der Fahrer optisch und/oder akustisch und/oder haptisch auf ausgewählte Fahrzustände wie ein unbeabsichtigtes Verlassen der Fahrspur, etc. hingewiesen wird. Das Frontradar 14 ist Teil einer Umfeldsensorik 18, zu der außerdem noch wenigstens ein Rückraumradar 20 und wenigstens ein Nahbereichssensor 22 gehören. Anstelle oder zusätzlich zu den Radarsensoren können ein oder mehrere Videosensoren vorgesehen sein, die eine entsprechende Funktionalität wie die Radarsensoren aufweisen.

Der Spurwechselassistent 12 wird hier durch drei Funktionsblöcke repräsentiert, nämlich eine Entscheidungseinrichtung 24 zur Entscheidung, ob ein Spurwechselwunsch des Fahrers anzunehmen ist, eine Erkennungseinrichtung 26 zur Erkennung eines geeigneten Spurwechselfensters im fließenden Verkehr auf der Nebenspur und eine Berechnungseinrichtung 28 zur Berechnung eines geeigneten Spurwechselzeitpunktes und zur Ausgabe einer entsprechenden Information und/oder zur Berechnung einer Beschleunigungsstrategie und zur Ausgabe eines entsprechenden Beschleunigung- bzw. Geschwindigkeitsinformation. In der Praxis können die genannten Funktionsblöcke des Spurwechselassistenten 12 und das Fahrerassistenzsystem 10 durch Programm-Module gebildet werden, die auf einem Mikrorechner oder einem Netzwerk von Mikrorechnern laufen und die Teil des Fahrerassistenzsystems sind.

Im gezeigten Beispiel soll angenommen werden, dass die Entscheidungseinrichtung 24 einen Spurwechselwunsch des Fahrers annimmt, wenn der Fahrer den Blinker betätigt. Dazu erhält die Entscheidungseinrichtung 24 von einem Blinkschalter 30 ein Signal, das das Setzen des Blinkers anzeigt. In einer anderen Ausführung wird alternativ oder ergänzend ein Spurwechselwunsch autonom festgestellt, beispielsweise durch Daten aus einer Karte (Navigationssystem) bei Auffahren auf eine Autobahn oder wenn eine Überholspur vorhanden ist und/oder wenn die Absolutgeschwindigkeit des eigenen Fahrzeugs größer ist als die des auf der eigenen Fahrspur unmittelbar vorausfahrenden Fahrzeugs. Diese Informationen werden vom Fahrerassistenzsystem auf der Basis des Frontradarsignals ermittelt und der Entscheidungseinrichtung 24 bereitgestellt.

Wenn die Entscheidungseinrichtung 24 entscheidet, dass ein Spurwechselwunsch des Fahrers anzunehmen ist, so veranlasst sie die Erkennungseinrichtung 26 mit Hilfe des Rückraumradars 20 und des Nahbereichssensors 22 den Verkehr auf der Nebenspur hinter und neben dem eigenen Fahrzeug zu überwachen und nach geeigneten Einscherlücken zu suchen. Wenn eine Einscherlücke gefunden ist, werden die Abstands- und Geschwindigkeitsdaten des Eigenfahrzeugs und des oder der Fahrzeuge auf der Nebenspur bzw. auf der Eigenspur, sofern vorhanden, an die Berechnungseinrichtung 28 übermittelt, die den geeigneten Spurwechselzeitpunkt und /oder die gegebenenfalls notwendige Beschleunigung bzw. die zu erreichende Geschwindigkeit für das Einfädeln in den fließenden Verkehr auf der Nebenspur errechnet. Entsprechende Information werden dann an das Fahrerassistenzsystem 10 übermittelt, das den Fahrer wie nachfolgend beschrieben informiert.

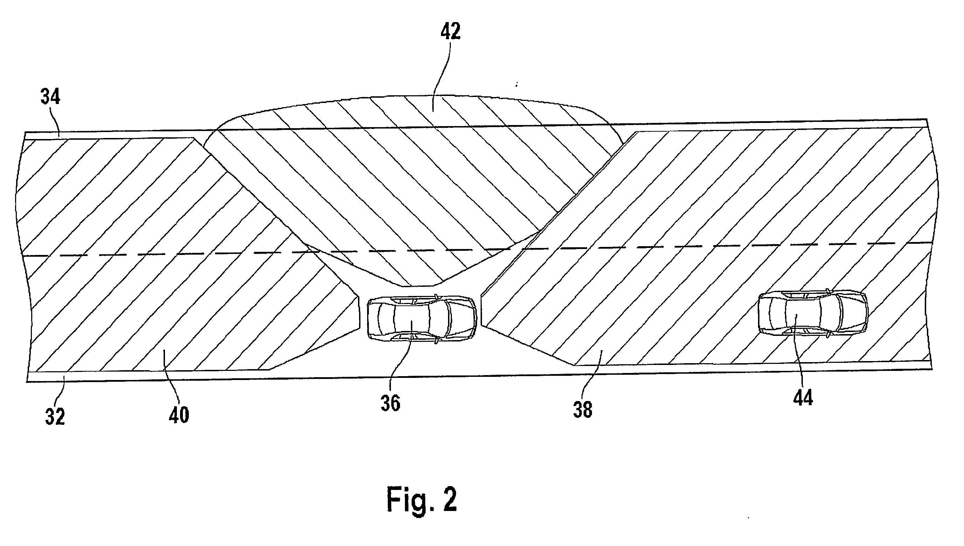

In Figur 2 ist in der Draufsicht eine zweispurige Fahrbahn mit einer rechten Spur 32 und einer linken Nebenspur 34 (Überholspur) dargestellt. Die Fahrzeuge bewegen sich dabei nach rechts. Auf der rechten Spur 32 fährt ein Fahrzeug 36, das mit dem System nach Figur 1 ausgerüstet ist. Als schraffierte Flächen sind der Ortungsbereich 38 des Frontradars 14, der Ortungsbereich 40 des Rückraumradars 20 und der Ortungsbereich 32 des wenigstens einen Nahbereichsensors 22 dargestellt. Das Frontradar überwacht den Verkehr auf beiden Spuren 32, 34 vor dem Fahrzeug 36, während das Rückraumradar den Verkehr auf der Nebenspur 34 hinter dem Fahrzeug 36 überwacht. Der Ortungsbereich 40 des Rückraumradars erfasst zwar auch die rechte Spur 32, doch ist das Rückraumradar aufgrund seines Winkelauffösungsvermögens in der Lage, zwischen den beiden Spuren zu unterscheiden, und Fahrzeuge auf der rechten Spur 32 werden ignoriert. Der Ortungsbereich 42 des Nahbereichssensors schließt die Lücke zwischen den Ortungsbereichen 38 und 40, so dass der Verkehr auf der Nebenspur 34 lückenlos überwacht werden kann.

In der in Figur 2 gezeigten Situation ist die Nebenspur 34 frei, und vor dem Fahrzeug 36 fährt ein langsameres Fahrzeug 44.

Zunächst fahren beide Fahrzeuge 36, 44 mit konstanter Geschwindigkeit. Das Fahrzeug 36 fährt mit der vom Fahrer gewählten Wunschgeschwindigkeit Da das Fahrzeug 44 langsamer ist, entscheidet die Entscheidungseinrichtung 24, dass ein Überholwunsch und damit ein Spurwechselwunsch des Fahrers zu unterstellen ist. Die Erkennungseinrichtung 26 sucht daraufhin nach einem Einscherfenster auf der Nebenspur 34, und da diese Spur frei ist, ist das Einscherfenster unendlich ausgedehnt. Für die Durchführung des Spurwechsels hat der Fahrer des Fahrzeugs 36 daher einen sehr großen zeitlichen Spielraum. Die Berechnungseinheit 28 übermittelt daher lediglich eine Spurwechselempfehlung an das Fahrerassistenzsystem, welches diese Information dem Fahrer anzeigt. Führt der Fahrer den Spurwechsel durch, wird das Fahrzeug 36 in der Regel beschleunigt, während das Fahrzeug 44 mit konstanter Geschwindigkeit weiter fahrt.

Der Spurwechselassistent legt in einer Ausführung auch einen Abbruchzeitpunkt fest, bis zu dem der Fahrer den Spurwechsel durchgeführt bzw. begonnen haben muss. Dies erfolgt durch Rücksetzen der Spurwechselempfehlungsinformation oder eine spezifische Warnung des Fahrers auf akustische oder optische Art, dass keine Spurwechselempfehlung mehr vorliegt Ebenso wird die Empfehlungsinformation zurückgesetzt, wenn der Spurwechsel durchgeführt wurde. Eine Durchführung des Spurwechsels wird z.B. durch Auswertung der Lenkbewegungen erkannt.

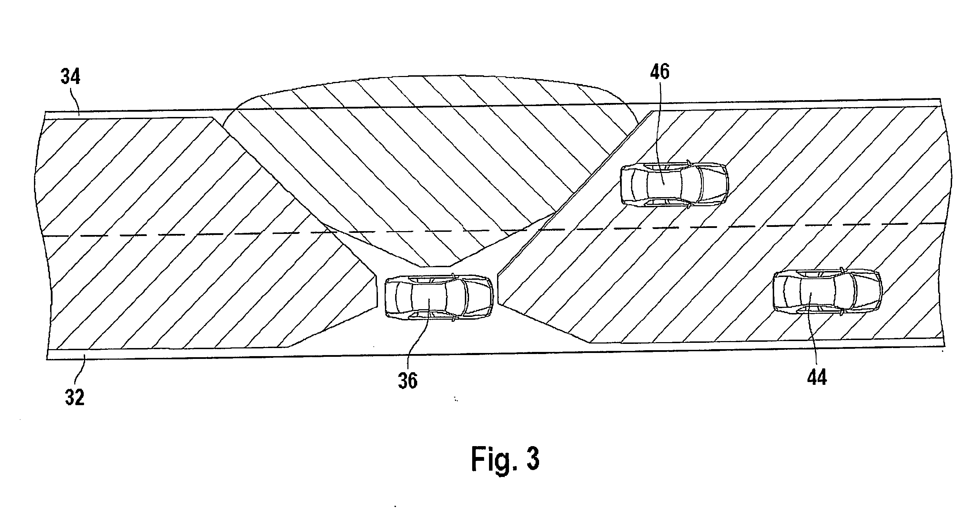

Figur 3 illustriert eine modifizierte Verkehrssituation, in der vor dem Fahrzeug 36 auf der Nebenspur 34 ein weiteres Fahrzeug 46 fährt, das vom Frontradar 14 geortet wird. In dem Zeitraum, der der in Figur 3 gezeigten Situation vorangeht, wurde das Fahrzeug 46 zunächst vom Rückraumradar 20 und dann vom Nahbereichssensor 22 geortet. Die Erkennungseinrichtung 26 hat erkannt, dass die Nebenspur 34 nicht frei ist, und deshalb wurde keine Spurwechselempfehlung ausgegeben. Stattdessen hat der Fahrer die Geschwindigkeit des Fahrzeugs 36 auf die Geschwindigkeit des Fahrzeugs 44 reduziert. Das Fahrzeug 44 wird vom Fahrzeug 36 in einem konstanten Abstand verfolgt. Dieser Abstand ist größer als ein minimaler Sicherheitsabstand.

Zu einem bestimmten Zeitpunkt wird der Abstand des Fahrzeugs 46 zum Eigenfahrzeug 36 größer als der Mindestabstand. Frühestens zu diesem Zeitpunkt kann das Fahrzeug 36 auf die Nebenspur 34 wechseln, ohne dass der Mindestabstand zum Fahrzeug 46 unterschritten wird Die Berechnungsseinrichtung 28 ist gibt zu diesem Zeitpunkt, die Spurwechselempfehlungsinformation aus. Der Fahrer beschleunigt das Fahrzeug 36. Ferner berechnet in einer Ausführung die Berechnungseinheit 28 eine geeignete zu erreichende Geschwindigkeit bzw. Beschleunigung zur Erreichung dieser Geschwindigkeit. Der zu erreichende Geschwindigkeitswert ist in diesem Falle sinnvoller Weise die Geschwindigkeit des Fahrzeugs 46.

Wie im zuvor beschriebenen Fall wird wieder durch den Spurwechselassistenten ein Abbruchzeitpunkt ta1 festgelegt, bis zu dem der Fahrer den Spurwechsel durchgeführt bzw. begonnen haben muss. Ansonsten wird die Empfehlungsinformation zurückgesetzt. Eine Durchführung des Spurwechsels wird z.B. durch Auswertung der Lenkbewegungen erkannt.

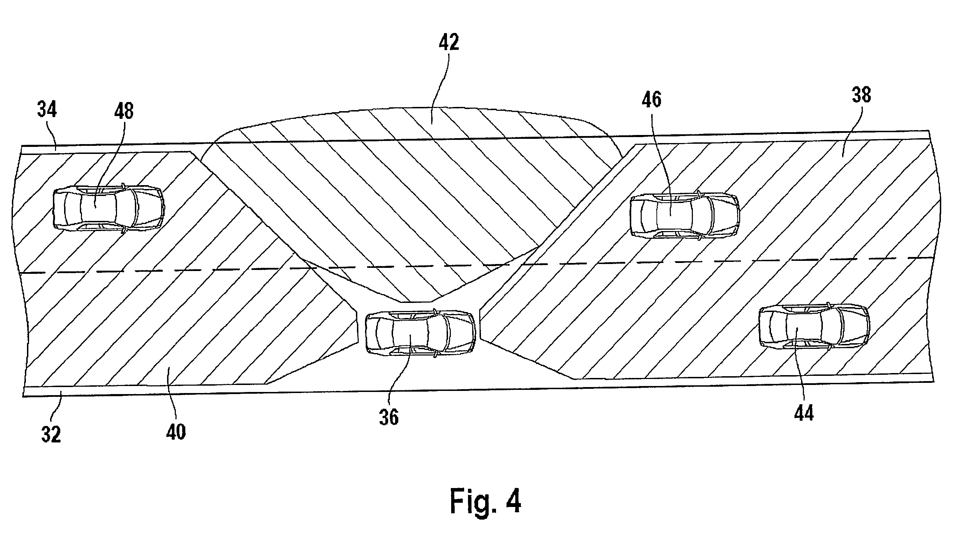

Figur 4 zeigt eine weitere Verkehrssituation, die sich von der Situation nach Figur 3 dadurch unterscheidet, dass auf der Nebenspur 34 hinter dem Fahrzeug 46 noch ein weiteres Fahrzeug 48 folgt, das vom Rückraumradar 20 des Fahrzeugs 36 geortet wird. Die Fahrzeuge 46 und 48 fahren mit gleicher Geschwindigkeit, und ihr gegenseitiger Abstand ist kleiner als die Summe der Mindestabstände zu dem Fahrzeug 36. Die Erkennungseinrichtung 26 stellt somit fest, dass zwischen den Fahrzeugen 46 und 48 kein Fenster für einen sicheren Spurwechsel offen ist. Dementsprechend unterbleibt die Spurwechselempfehlung, und sämtliche Fahrzeuge setzen ihre Fahrt unverändert fort Frühestens nach Abschluss des Überholvorgangs des Fahrzeugs 48 könnte eine Spurwechselempfehlung ausgegeben werden, falls auf das Fahrzeug 48 nicht noch ein weiteres Fahrzeug folgt.

Wenn das Fahrzeug 48 den Ortungsbereich 40 des Rückraumradars verlässt, tritt es in den Ortungsbereich 42 des Nahbereichssensors ein, und auch in diesem Fall erkennt die Erkennungseinrichtung 26, dass das Spurwechselfenster weiterhin geschlossen ist. Nach Abschluss des Überholvorgangs des Fahrzeugs 48 kommt man zur Verkehrsituation nach Figur 3, sofern dem Fahrzeug 48 kein weiteres Fahrzeug folgt.

Geht man davon aus, dass bei einer Situation wie Figur 4 der Abstand zwischen den Fahrzeugen 46 und 48 größer als die Summe der Mindestabstände, kann sich ein Fenster für einen gefahrlosen Spurwechsel auftut. Dementsprechend wird eine Spurwechselempfehlung durch die Berechnungseinrichtung 28 ausgegeben, wenn die Mindestabstände zu den beiden Fahrzeugen auf der Nebenspur eingehalten werden können. Ferner wird die Zielgeschwindigkeit, auf die das Fahrzeug 36 beschleunigen muss, in diesem Fall ermittelt. Diese muss mindestens gleich der Geschwindigkeit der Fahrzeuge 46 und 48 sein. Daraus kann ferner die Größe der notwendigen Beschleunigung berechnet werden und zwar so, dass der Abstand zwischen den Fahrzeugen 36 und 48 zu keinem Zeitpunkt kleiner wird als der Mindestabstand. So ist sichergestellt, dass ein ausreichender Mindestabstand zu den Fahrzeugen 46 und 48 eingehalten wird, ohne dass das Fahrzeug 48 seine Geschwindigkeit verringern muss, unabhängig davon, zu welchem Zeitpunkt, innerhalb des Fensters der Fahrer den Spurwechsel vornimmt. Die Zielgeschwindigkeit bzw. die errechnete Beschleunigung werden dem Fahrer nach Beginn des Spurwechsels angezeigt, z.B. in der Tachometeranzeige als feste oder entsprechend der notwendigen Geschwindigkeitsänderung variable Markierung.

Hat das Fahrzeug 46 eine höhere Geschwindigkeit hat als das Fahrzeug 36 und ist die Geschwindigkeit des Fahrzeugs 48 ist etwas kleiner als die Wunschgeschwindigkeit des Fahrzeugs 36, so vergrößert sich der Abstand zwischen den Fahrzeugen 48 und 36 am Ende des Beschleunigungsvorgangs wieder. Ist jedoch das Fahrzeug 48 bereits so nahe an das Fahrzeug 36 herangekommen, dass der Abstand zwischen den Fahrzeugen 48 und 36 auch bei maximal möglicher oder zugelassener Beschleunigung des Fahrzeugs 36 den Mindestabstand unterschreitet, müsste der Fahrer des Fahrzeugs 48 seinerseits das Fahrzeugs zu verzögern, um den Mindestabstand einzuhalten, wenn der Fahrer des Fahrzeugs 48 seine Fahrt mit unverminderter Geschwindigkeit fortsetzt.

Diese Situation wird im beschriebenen Ausführungsbeispiel unter der Bedingung zugelassen, dass die erzwungene Verzögerung des Fahrzeugs 48 unterhalb eines bestimmten Beschleunigungs- bzw. Verzögerungsgrenzwertes bleibt. Dieser Grenzwert ist so gewählt, dass der Fahrer des Fahrzeugs 48 nicht über Gebühr behindert und jedenfalls nicht gefährdet wird und sollte auch so gewählt sein, dass die nötige Verzögerung des Fahrzeugs 48 kleiner ist als die typische Motorbremswirkung eines Fahrzeugs, so dass der Fahrer des Fahrzeugs 48 nicht gezwungen wird, aktiv zu bremsen.

Im Allgemeinen wird man für die Beschleunigung des Fahrzeugs 36 bei dem durch die Berechnungseinrichtung 38 ausgegebenen Beschleunigungsempfehlung unter Komfortgesichtspunkten einen Grenzwert wählen, der das tatsächliche Beschleunigungsvermögen des Fahrzeugs nicht ausschöpft. Dieser Grenzwert kann jedoch situationsabhängig variieren. Beispielsweise kann man größere Beschleunigungen zulassen, wenn die Diskrepanz zwischen der Geschwindigkeit des vorausfahrenden Fahrzeugs 44 und der Geschwindigkeit des Eigenfahrzeugs sehr groß ist. Ebenso ist es denkbar, dass bei hoher Verkehrsdichte die Beschleunigungsgrenze erhöht wird, damit die Wahrscheinlichkeit steigt, ein geeignetes Fenster für einen gefahrlosen Spurwechsel zu finden.

Während in den oben gezeigten Situationen der Zeitpunkt, zu dem die Spurwechsel- und ggf. die Beschleunigungsempfehlung ausgegeben wird, jeweils so gewählt wird, dass er mit dem Zeitpunkt zusannmenfällt, an dem das vordere Fahrzeug 46 auf der Nebenspur den Mindestabstand erreicht hat, kann in einer modifizierten Ausführungsform die Empfehlung auch schon zu einem früheren Zeitpunkt ausgegeben werden. Auch hierdurch vergrößert sich die Chance, ein geeignetes Spurwechselfenster zu finden.

Bei der Erfindung handelt es sich um eine Assistenzfunktion für Kraftfahrzeuge jeglicher Art zur Unterstützung des Fahrers bei Spurwechseln. Die Assistenzfunktion verwendet dabei Sensorikdaten, die Aufschluss über den rückwärtigen Verkehr liefern. Hierbei können verschiedene Radarsensoriken (Short oder Long Range Radar), Ultraschall oder Videotechniken zum Einsatz kommen. Zudem werden Informationen über die Verkehrs- und Streckensituation vor dem Fahrzeug verwendet. Dabei können analog zur rückwärtigen Situation Radar-, Ultraschall- oder Videotechniken eingesetzt werden. Zusätzlich können GPS-Daten (Navigation) genutzt werden, um den Streckenverlauf zu ermitteln. Die gesammelten Daten werden von der Assistenzfunktion zentral ausgewertet, was einer Analyse der aktuelle Situation entspricht. Aufgabe der Assistenzfunktion ist nun eine situationsangepasste Empfehlung des optimalen Zeitpunkt zum Spurwechsel, ggf. kombiniertmit einer Beschleunigungsempfehlung. Die Beschleunigungsempfehlung kann dabei taktil über die Pedalerie erfolgen oder akustisch. Auch eine optische Anzeige wäre denkbar. Der optimale Zeitpunkt für den Spurwechsel kann ebenso über ein akustisches oder ein taktiles Signal (z.B. Lenkrad) dem Fahrer signalisiert werden. Eine visuelle Anzeige ist auch hier möglich. Ferner kann in einer Ausführung eine Sprachausgabe vorgesehen sein, welche Anweisungen an den Fahrer in Sprache ausgibt, z.B. "bitte für Spurwechel beschleunigen auf 80 kmh" oder "Spurwechsel vornehmen", etc. Die Assistenzfunktion kann entweder durch Betätigen des Blinkers aktiviert oder - in Fällen des Auffahrens auf eine Autobahn - auch autonom durch die Navigationsdaten gesteuert werden.

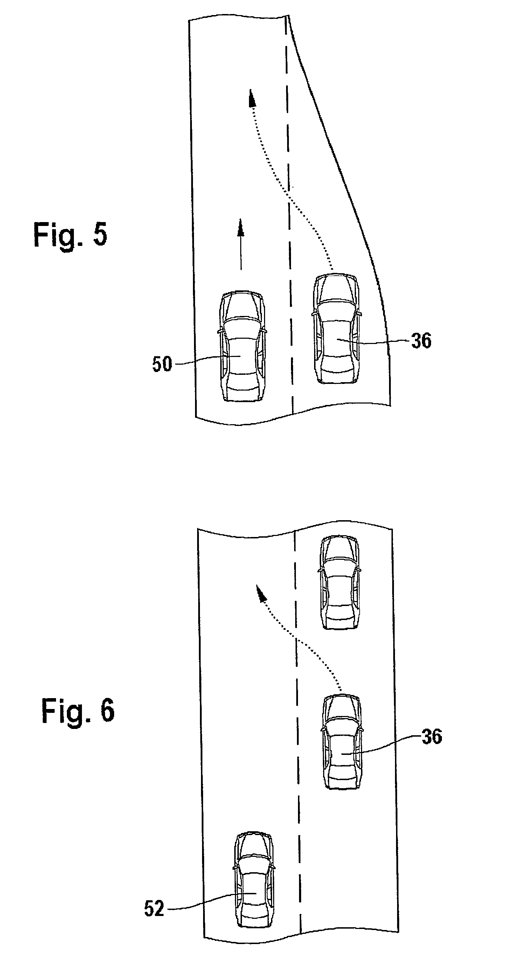

Auch in der in Figur 5 dargestellten Verkehrssituation erhält der Fahrer des Fahrzeugs 36 eine Spurwechelempfehlung ggf. zusammen mit einer Beschleunigungsempfehlung, um noch rechtzeitig vor Fahrzeug 50 auf die zweite Spur zu wechseln oder das Fahrzeug 50 überholen zu lassen. In ersten Fall wird die Beschleunigung bzw. die Endgeschwindigkeit so berechnet, dass bei einem Spurwechsel ein Mindestabstand zu dem nachfoglenden Fahrzeug eingehalten wird. Besonders vorteilhaftist, wenn in dieser Situation zuerst die Beschleunigungsempfehlung, dann die Spurwechselempfelung ausgegebn wird, wenn der Mindestabstand ohne Spurwechsel erreicht ist. Ist dies nicht der Fall, d.h. kann durch eine vernünftige Beschleunigung des Fahrzeugs der Mindestabstand nicht hergestellt werden, wird keine Spurwechselempfehlung an den Fahrer gegeben, ergänzend in einer Ausführung eine Verzögerungsempfehlung bzw. eine Empfehlung zum Konstanthalten der Geschwindigkeit. Ist das Fahrzeug 50 vorbeigefahren, wird wie anhand Figur 2 beschrieben vorgegangen.

In der Verkahrssituation nach Figur 6 erhält der Fahrer des Fahrzeugs 36 eine Beschleunigungs- und Spurwechselempfehlung um noch rechtzeitig vor dem Fahrzeug 52 auf die Überholspur wechseln zu können. Dies erfolgt dann, wenn aufgrund der Geschwindigkeit des Fahrzeugs 52 und der Beschleunigungmöglichkeiten des Fahrzeugs 36 der Mindestabstand zum Fahrzeug 52 eingehalten werden kann auch bei Spurwechsel. Ist dies nicht oder nicht mehr der Fall, wird keine Empfehlung ausgegeben bzw. eine bereits gegebene Empfehlung für den Spurwechsel bzw. für die Beschleunigung zurückgesetzt und der Fahrer akitv durch eine optische, haptische, visuelle Warnung oder Sprachausgabe zum Abbruch des Spurwechsels aufgefordert.

## Patentansprüche

1. Verfahren zur Fahrerunterstützung bei Kraftfahrzeugen in einer Verkehrssituation in der ein Fahrzeug (36) vor einem anderen Fahrzeug (50) auf eine Nebenspur wechselt, mit einer Umfeldsensorik, (18) zur Erfassung des Verkehrsumfelds einschließlich des Verkehrs auf einer Nebenspur (34), **dadurch gekennzeichnet, dass** bei einem Spurwechselwunsch des Fahrers anhand der Daten der Umfeldsensorik (18) zuerst eine Empfehlung für eine vorzunehmende Beschleunigung des Fahrzeugs (36) bzw. eine zu erreichende Geschwindigkeit für den Spurwechsel angezeigt wird, dass dann dem Fahrer eine Spurwechselempfehlung ausgegeben wird, wenn der Mindestabstand bei einem Spurwechsel zum nachfolgenden Fahrzeug (50) auf der Nebenspur (34) ohne Spurwechsel erreicht ist.

2. Verfahren nach Anspruch 1, **dadurch gekennzeichnet, dass** das Informationssignal eine akustische und/oder eine optische Anzeige steuert.

3. Verfahren nach einem der vorhergehenden Ansprüche, **dadurch gekennzeichnet, dass** das Informationssignal eine Sprachausgabe steuert.

4. Verfahren nach einem der vorstehenden Ansprüche, **dadurch gekennzeichnet, dass** das Informationssignal abhängig von den Signalen wenigstens eines Sensors (20) zur Überwachung des Rückraums auf der Nebenspur (34) hinter dem eigenen Fahrzeug und wenigstens eines Sensors (22) zur Überwachung der Nebenspur in Höhe des eigenen Fahrzeugs erzeugt wird.

5. Vorrichtung zur Fahrerunterstützung in einer Verkehrssituation, in der ein Kraftfahrzeug (36) vor einem anderen Fahrzeug (50) auf einer Nebenspur (34) einschert, mit einer Umfeldsensorik (18) zur Erfassung des Verkehrsumfelds einschließlich des Verkehrs auf der Nebenspur (34), **dadurch gekennzeichnet, dass** eine Berechnungseinheit (28) vorgesehen ist, die bei einem Spurwechselwunsch des Fahrers des Fahrzeugs (36) anhand der Daten der Umfeldsensorik (18) zunächst ein Inforniationssignal für den Fahrer ermittelt, welches eine Empfehlung für eine vorzunehmende Beschleunigung bzw. eine zu erreichende Geschwindigkeit für den Spurwechsel anzeigt, die dann ein Informationssignal für den Fahrer ermittelt, welches dem Fahrer eine Spurwechselempfehlung anzeigt, wenn der Mindestabstand bei einem Spurwechsel zum nachfolgenden Fahrzeug (50) auf der Nebenspur (34) ohne Spurwechsel erreicht ist.

## Claims

1. Method for providing drivers with assistance in motor vehicles in a traffic situation in which a vehicle (36) changes onto an adjacent lane in front of another vehicle (50), having a surroundings sensor system (18) for sensing the traffic surroundings including the traffic on an adjacent lane (34), **characterized in that** in case of a lane change request by the driver a recommendation for acceleration of the vehicle (36) which is to be brought about or a speed which is to be achieved for the lane change is first indicated by reference to the data of the surroundings sensor system (18), **in that** a lane change recommendation is then output to the driver if the minimum distance from the following vehicle (50) on the adjacent lane (34) for a lane change is reached without a lane change occurring.

2. Method according to Claim 1, **characterized in that** the information signal controls an acoustic indicator and/or an optical display.

3. Method according to one of the preceding claims, **characterized in that** the information signal controls a voice output.

4. Method according to one of the preceding claims, **characterized in that** the information signal is generated as a function of the signals of at least one sensor (20) for monitoring the space behind the driver's own vehicle on the adjacent lane (34), and of at least one sensor (22) for monitoring the adjacent lane at the level of the driver's own vehicle.

5. Device for providing drivers with assistance in a traffic situation in which a motor vehicle (36) cuts in on an adjacent lane (34) in front of another vehicle (50), having a surroundings sensor system (18) for sensing the traffic surroundings including the traffic on the adjacent lane (34), **characterized in that** a calculation unit (28) is provided which in the case of a lane change request by the driver of the vehicle (36) firstly determines an information signal for the driver by reference to the data of the surroundings sensor system (18), which information signal indicates a recommendation for acceleration which is to be brought about or a speed which is to be achieved for the lane change, which calculation unit (28) then determines for the driver an information signal which indicates a lane change recommendation to the driver if the minimum distance from the following vehicle (50) on the adjacent lane (34) for a lane change is reached without a lane change occurring.

## Revendications

1. Procédé d'assistance au conducteur d'un véhicule automobile dans une situation de trafic dans laquelle un véhicule (36) situé en avant d'un autre véhicule (50) passe sur une bande de circulation latérale, le véhicule étant doté d'un ensemble (18) de détecteurs d'environnement qui détecte l'environnement du trafic, notamment le trafic sur une bande de circulation latérale (34),
**caractérisé en ce que**
lorsque le conducteur souhaite changer de bande de circulation, à l'aide des données de l'ensemble (18) de détecteur d'environnement, une recommandation d'accélération ou d'une vitesse à atteindre par le véhicule (36) en vue du changement de bande de circulation est affichée et **en ce qu'**ensuite le conducteur reçoit une recommandation de changement de bande de circulation lorsque le véhicule a atteint par rapport au véhicule suivant (50) présent sur la bande de circulation latérale (34) la distance minimale nécessaire pour le changement de bande de circulation avant le changement de bande de circulation.

2. Procédé selon la revendication 1, **caractérisé en ce que** le signal d'information commande un affichage acoustique et/ou un affichage visuel.

3. Procédé selon l'une des revendications précédentes, **caractérisé en ce que** le signal d'information est une émission vocale.

4. Procédé selon l'une des revendications précédentes, **caractérisé en ce que** le signal d'information est formé en fonction des signaux d'au moins un détecteur (20) de surveillance de l'espace arrière sur la bande de circulation latérale (34) derrière le véhicule propre et au moins un détecteur (22) de surveillance de la bande de circulation latérale à la hauteur du véhicule propre.

5. Dispositif d'assistance au conducteur dans une situation de trafic dans laquelle un véhicule automobile (36) s'insère devant un autre véhicule (50) sur une bande de circulation latérale (34), doté d'un ensemble (18) de détecteurs d'environnement qui détectent l'environnement du trafic, notamment le trafic sur la bande de circulation latérale (34),
**caractérisé en ce que**
une unité de calcul (28) est prévue pour, au cas où le conducteur du véhicule (36) souhaite changer de bande de circulation, déterminer à l'aide des données de l'ensemble (18) de détecteurs d'environnement d'abord un signal informant le conducteur et indiquant une recommandation d'accélération à entreprendre ou de vitesse à atteindre en vue du changement de bande de circulation, et pour déterminer ensuite un signal informant le conducteur et donnant au conducteur une recommandation de changer de bande de circulation lorsque, lors du changement de bande de circulation, le véhicule a atteint la distance minimale par rapport au véhicule (50) qui le suit sur la bande de circulation latérale (34) avant le changement de bande de circulation.
